# EUROPEAN PATENT APPLICATION

(11) **EP 4 462 654 A1**
(43) Date of publication of application: **13.11.2024**
(21) Application number: 23204582.3
(22) Date of filing: 19.10.2023
(51) Int. Cl.: H02K 5/128, H02K 15/12, H02K 41/06

(54) **ROTARY MACHINE AND METHOD FOR MANUFACTURING THE SAME**

(30) Priority: 12.05.2023 KR 20230061586
(71) Applicant: HYUNDAI MOTOR COMPANY, Seoul 06797 (KR); Kia Corporation, Seocho-gu Seoul 06797 (KR)
(72) Inventor: JANG, Hyung Kwan, Seoul (KR); LEE, Tae Gyu, Seoul (KR); MIN, Byung Ho, Seoul (KR); HONG, Woong Pyo, Seoul (KR)
(74) Representative: Viering, Jentschura & Partner mbB Patent- und Rechtsanwälte

(57) **Abstract**

The present disclosure relates to a rotary machine configured to maximize a power by reducing an air gap between a stator and a rotor, for example, in a rotary machine such as a superconducting motor, and a method for manufacturing the same. The rotary machine may include: a stator; a rotor disposed to be separated from the stator by an air gap and configured to be rotatable; and a coating layer formed on at least one of a first opposite surface of the stator and a second opposite surface of the rotor, the first opposite surface and the second opposite surface facing each other.

## Description

### TECHNICAL FIELD

The present disclosure relates to a rotary machine configured to maximize a power by reducing an air gap between a stator and a rotor, for example, in a rotary machine such as a superconducting motor, and a method for manufacturing the same.

### BACKGROUND

A stator and a rotor may be installed inside a rotary machine such as a superconducting motor. In order to generate an induced current or to generate rotational force by magnetic force, a coil may be provided in the stator and a magnet is provided in the rotor.

In order for the rotor of the rotary machine to rotate smoothly, because friction with the stator should not occur, an air gap may be present between the stator and the rotor. A radial length of the air gap (i.e., a distance between the stator and the rotor) may be determined in consideration of a capacity and size of the rotary machine, manufacturability, and use environments, as well as cooling performance.

However, the air gap acts as a factor limiting power and performance of the rotary machine. In other words, with an increase in an air gap, the magnetic force between the stator and the rotor decreases, thereby reducing the power thereof.

Descriptions in this background section are provided to enhance understanding of the background of the disclosure, and may include descriptions other than those of the prior art already known to those of ordinary skill in the art to which this technology belongs.

### SUMMARY

The following summary presents a simplified summary of certain features. The summary is not an extensive overview and is not intended to identify key or critical elements.

An aspect of the present disclosure is to provide a rotary machine configured to maximize a power by reducing an air gap between a stator and a rotor, for example, in a rotor such as a superconducting motor, and a method for manufacturing the same.

A rotary machine may comprise: a stator; a rotor configured to rotate and disposed to be separated from the stator by an air gap; and a coating layer formed on at least one of a first opposite surface of the stator and a second opposite surface of the rotor, the first opposite surface and the second opposite surface facing each other.

The stator may comprise a stator core and a coil wound around the stator core. The rotor may comprise a rotor core and a plurality of magnets. The first opposite surface may comprise an internal circumferential surface of the stator core, and the second opposite surface may comprise an external circumferential surface of the rotor core.

A plurality of protrusions protruding radially outward and spaced apart from each other in a circumferential direction of the rotor core may be formed on a portion of the rotor core. Each of the plurality of protrusions may comprise a curved surface. The second opposite surface may comprise the curved surface.

The rotary machine may further comprise a sleeve coupled to the external circumference surface of the rotor core. The second opposite surface may comprise an external circumferential surface of the sleeve.

The external circumferential surface of the sleeve may have a surface roughness of Ra 0.05 um or less.

The coating layer may be formed of a nonmetallic material.

The coating layer may comprise a carbon-based coated layer containing carbon.

The coating layer may be formed by diamond-like carbon (DLC) coating.

A thickness of the coating layer may be in a range of 1 um to 100 µm.

A distance (d) between the stator and the rotor may be in a range of 0.01 mm to 1 mm.

The rotary machine may further comprise a lubricant in the air gap between the stator and the rotor.

A method may comprise: preparing a stator core of a stator and a rotor core of a rotor; cleaning the stator core and the rotor core; forming a coating layer on at least one of a first opposite surface of the stator core and a second opposite surface of the rotor core; and combining the stator core and the rotor core such that the first opposite surface and the second opposite surface face each other.

The method may further comprise: polishing an internal circumferential surface of the stator core and an external circumferential surface of the rotor core to have a surface roughness of a predetermined value, wherein the first opposite surface comprises the internal circumferential surface of the stator core, and wherein the second opposite surface comprises the external circumferential surface of the rotor core.

The method may further comprise: coupling a sleeve to a circumference portion of the rotor core, wherein the coating layer is formed on at least one of an internal circumferential surface of the stator core or an external circumferential surface of the sleeve.

The method may further comprise: winding a coil around the stator core; inserting a magnetized magnet into the rotor core; and assembling the stator and the rotor.

These and other features and advantages are described in greater detail below.

### BRIEF DESCRIPTION OF DRAWINGS

The above and other aspects, features, and advantages of the present disclosure will be more clearly understood from the following detailed description, taken in conjunction with the accompanying drawings, in which:
FIG. 1 is a view illustrating a rotary machine according to a first example of the present disclosure;
FIG. 2 is a view illustrating a rotary machine according to a second example of the present disclosure;
FIG. 3A and FIG. 3B are photographs respectively illustrating a rotor (a) before coating, and a rotor (b) with a sleeve having a coated layer formed thereon after the coating, in a rotary machine in according to the second example of the present disclosure;
FIG. 4 is a flowchart illustrating a method for manufacturing a rotary machine according to the present disclosure; and
FIG. 5 is a graph comparing power test results of a rotary machine according to the related art and a rotary machine according to the present disclosure.

### DETAILED DESCRIPTION

Hereinafter, the present disclosure will be described in detail with reference to the accompanying drawings. In adding reference numerals to elements of each of the drawings, although the same elements are illustrated in other drawings, like reference numerals may refer to like elements.

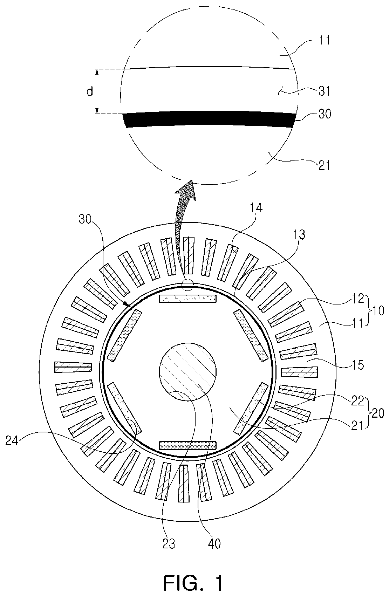

FIG. 1 is a view illustrating a rotary machine according to a first example of the present disclosure.

The rotary machine may include a stator 10, a rotor 20, and a coating layer 30.

The stator 10 includes a stator core 11 and a coil 12 wound around the stator core 11. The stator 10 may be formed in a shape through which a shaft 40 may penetrate, and may be fixedly supported by a housing (not illustrated) of the rotary machine.

However, the fixing and the arrangement relationship of the stator 10 are not necessarily limited to the aforementioned example, and for example, the shaft 40 may be fixed, and the stator 10 may be fixedly coupled to an external circumferential surface of the shaft 40.

The stator core 11 may be formed by providing a plurality of stator core plates in which an electric steel plate is molded into a predetermined shape and stacking the plurality of stator core plates in an axial direction.

The stator core 11 may include a rotor accommodating hole 13 formed by extending in the axial direction so as to accommodate the rotor 20 in a center thereof. The stator core 11 may include a plurality of slots 14 and a plurality of poles 15 formed alternately around the rotor accommodating hole 13.

The plurality of poles 15 may be disposed at the same interval in a circumferential direction of the stator core 11, and the slot 14 may be formed between two poles disposed adjacently to each other.

The coil 12 may be wound around the pole 15 in both slots 14. The stator 10 may be configured by winding a coil for each pole of the stator core 11.

The rotor 20 may include a rotor core 21 and a plurality of magnets 22 inserted into the rotor core 21. The rotor 20 may be fixedly coupled to the external circumferential surface of the shaft 40 in a state in which the shaft 40 penetrates, and may be accommodated in the rotor accommodating hole 13 of the stator 10 and may be rotated with the shaft 40.

In this case, the shaft 40 may be rotated together with the rotor 20, and rotational force of the rotor 20 may be transferred to the outside or applied from the outside.

However, the arrangement relationship of the rotor 20 is not necessarily limited to the aforementioned example, and for example, the stator 10 may be fixedly coupled to the external circumferential surface of the shaft 40, and the rotor 20 may rotate around the stator 10 while surrounding the stator 10.

The rotor core 21 may be formed by providing a plurality of rotor core plates in which an electric steel plate is molded into a predetermined shape, and stacking the plurality of rotor core plates in the axial direction.

The rotor core 21 may include a shaft insertion hole 23 formed by extending in the axial direction so that the shaft 40 may be inserted in the center thereof. The rotor core 21 may include a plurality of magnet insertion holes 24 formed around the shaft insertion hole 23 and allowing the magnets 22 to be inserted thereinto.

For example, the rotor core 21 may be formed in an annular shape, the shaft 40 may be inserted and penetrate into an internal circumference portion of the rotor core 21, and the plurality of magnets 22 may be inserted and arranged in an external circumference portion of the rotor core 21.

The plurality of magnet insertion holes 24 may be formed in the same shape and may be spaced apart from each other and arranged at the same interval in a circumferential direction of the rotor core 21.

The magnet 22 may be formed to have a cross-sectional shape corresponding to a cross-sectional shape of the magnet insertion hole 24, and a plurality of magnets may also be formed in the same shape. The rotor 20 may be configured by inserting and arranging the magnets 22 for each magnet insertion hole of the rotor core 21.

An air gap 31 may be present between the stator 10 and the rotor 20. However, if the air gap 31 increases, magnetic force between the stator and the rotor may be reduced, which may reduce an electrical power or a mechanical torque power of the rotary machine.

The coating layer 30 may be formed on at least one of a first opposite surface of the stator 10 and a second opposite surface of the rotor 20, which face each other. In other words, a coating layer may be formed in a region in which a friction between the stator 10 and the rotor 20 occurs.

For example, when the rotor 20 is accommodated in the rotor accommodating hole 13 of the stator 10 and is rotated with the shaft 40, an internal circumferential surface of the stator core 11 may act as the first opposite surface, and an external circumferential surface of the rotor core 21 may act as the second opposite surface.

The coating layer 30 may be comprised of, for example, a layer formed of a non-metallic material. The non-metallic materials include ceramic-based materials (such as aluminum oxide, silicon nitride, silicon oxide and methane nitride), resin-based materials (such as fluorine resins, epoxy resins, and silicon resins), and carbon-based materials (such as diamond-like carbon (hereinafter referred to as DLC), silicon-containing DLC, and tetrahedral amorphous carbon).

A ceramic coating may form an inorganic film by uniformly dispersing a metal oxide-based binder and an inorganic filler, applying the same to an opposite surface after liquefaction, and heat-treating the same at a predetermined temperature.

A resin coating may form an inactive coating layer (e.g., most of the resin is made into paint and sprayed or applied and is then heated and sintered at a predetermined temperature) . However, aspects of the present disclosure are not limited thereto, and for example, a coating layer may be formed by flame plasma-treating the surface to be coated, applying a resin solution to a corresponding surface, and irradiating ultraviolet rays.

In the rotary machine according to the first example of the present disclosure, a carbon-based coating layer 30 may be formed on at least one of the first opposite surface of the stator 10 and the second opposite surface of the rotor 20. Since characteristics such as hardness, a friction coefficient, and heat resistance vary according to the content of carbon, the coating layer suitable for a use environment may be formed.

More specifically, representative DLC coating of the carbon-based coating layer 30 may be formed by depositing a carbon film on the opposite surface of the stator and/or the rotor, by generating plasma in a vacuum using carbon-based gas as a main component of diamond. A carbon film having a structure similar to that of a diamond is formed on the corresponding opposite surface, and the carbon film has an amorphous structure.

A physical vapor deposition (PVD) method, a plasma enhanced chemical vapor deposition (PECVD) method, and a plasma-assisted chemical vapor deposition (PACVD) method may be used as a method for forming the DLC coating. A temperature at the time of coating may be in the range of about 150°C to 500°C.

The coating layer 30 formed by the DLC coating may have high hardness, high waterproofness, and a low friction coefficient and low conductivity.

The thickness of the coating layer 30 may be in the range of about 1 um to 100 um. For example, when the thickness of the coating layer 30 is less than 1 µm, the coating layer 30 may be significantly thin to reduce the durability, which may result in easy breakage or damage. On the other hand, when the thickness of the coating layer 30 exceeds 100 µm, a lubricant may be improved as the thickness of the coating layer 30 increases, but the uniformity of the coating layer 30 may decrease and a thickness deviation may increase, which may adversely affect the lubricant.

Since the coating layer 30 is formed on at least one of the first opposite surface of the stator 10 and the second opposite surface of the rotor 20, a radial length of the air gap 31 (e.g., a distance (d) between the stator 10 and the rotor 20) may be in the range of above 0.01 mm to 1 mm.

The air gap 31 between the stator 10 and the rotor 20 may be filled with the lubricant to improve lubrication performance and/or cooling performance. A pressurized and supplied lubricant may cool the stator 10 and/or the rotor 20 by exchanging heat with the stator 10 or the rotor 20 while flowing in an axial direction of the shaft 40 within the air gap 31. The lubricant may relieve friction between the stator 10 and the rotor 20 by forming a lubricant film in the air gap 31, thereby cooling the rotary machine.

Friction may be reduced on the opposite surface of the stator 10 and/or the rotor 30 to which the coating layer 30 is applied, thereby preventing wear and damage. Moreover, since the air gap 31 between the stator 10 and the rotor 20 may be minimized, an air gap-free rotary machine with almost no air gap may be provided.

For example, in a case in which the rotary machine is a motor, if the air gap 31 between the stator 10 and the rotor 20 is minimized, a diameter of the air gap may increase which is a distance from an origin as the center of the shaft 40 to an intermediate portion of the air gap 31, and accordingly, magnetic flux linkage by the magnet 22 may increase to increase a mechanical torque power accordingly.

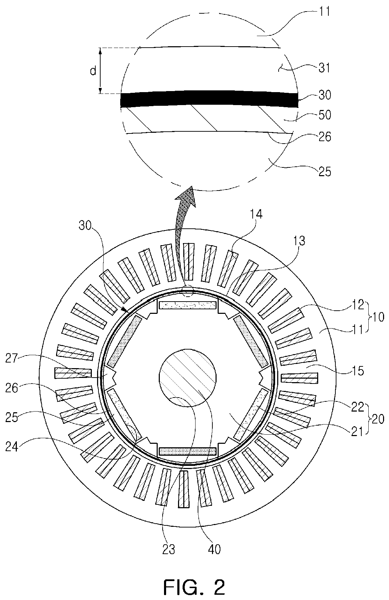

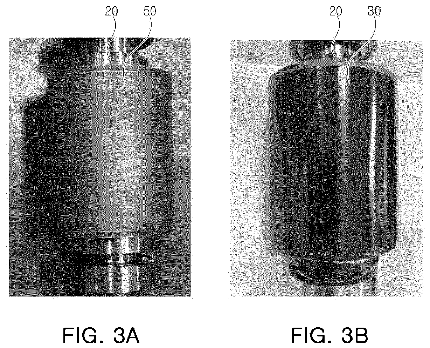

FIG. 2 is a view illustrating a rotary machine according to a second example of the present disclosure. FIG. 3 is photographs respectively illustrating a rotor (a) before coating, and a rotor (b) with a sleeve having a coated layer formed thereon after the coating, in the rotary machine in according to the second example of the present disclosure.

The rotary machine according to the second example of the present disclosure may include a stator 10, a rotor 20, a sleeve 50, and a coating layer 30.

The second example illustrated in FIG. 2 may differ from the first example only in the shape of the rotor core 21 and the addition of a sleeve 50, and the remaining components of the second example are the same as those of the first example. Accordingly, in describing the rotary machine of the second example, the same reference numerals will be assigned to components identical to those of the rotary machine according to the first example described above, and detailed descriptions of configurations and functions thereof will be omitted. In some implementations, the sleeve 50 may be configured in the first example shown in FIG. 1.

The rotor 20 may include a rotor core 21 and a plurality of magnets 22 inserted into the rotor core 21. The rotor 20 may be fixedly coupled to an external circumferential surface of a shaft 40 in a state in which the shaft 40 penetrates, and may be accommodated in a rotor accommodating hole 13 of the stator 10 and may be rotated with the shaft 40.

The rotor core 21 may be formed by providing a plurality of rotor core plates in which an electric steel plate is molded into a predetermined shape, and stacking the plurality of rotor core plates in the axial direction.

The rotor core 21 may include a shaft insertion hole 23 formed by extending in the axial direction so that the shaft 40 may be inserted in a center thereof. The rotor core 21 may include a plurality of magnet insertion holes 24 formed around the shaft insertion hole 23 and allowing the magnets 22 to be inserted thereinto.

For example, the rotor core 21 may be formed in an annular shape, the shaft 40 may be inserted and penetrate into an internal circumference portion of the rotor core 21, and the plurality of magnets 22 may be inserted and arranged in an external circumference portion of the rotor core 21.

The plurality of magnet insertion holes 24 may be formed in the same shape and may be spaced apart from each other and arranged at the same interval in a circumferential direction of the rotor core 21.

The magnet 22 may be formed to have a cross-sectional shape corresponding to the cross-sectional shape of the magnet insertion hole 24, and a plurality of magnets may also be formed in the same shape. The rotor 20 may be configured by inserting and arranging the magnets 22 for each magnet insertion hole of the rotor core 21.

An external circumferential portion of the rotor core 21 may have a plurality of protrusions 25 formed thereon. The plurality of protrusions 25 may be arranged at the same interval in the circumferential direction of the rotor core 21.

Each of the protrusions 25 may be formed to protrude radially outward from an external circumferential edge of the rotor core 21, and a distal surface away from a central portion of the rotor core 21 in each protrusion may be formed as a substantially arc-shaped curved surface 26. A groove portion 27 may be formed between two protrusions disposed adjacently to each other.

If a plurality of magnet insertion holes 24 are installed, the magnet insertion holes 24 and the protrusions 25 may be installed correspondingly one by one. Accordingly, at least one magnet 22 may be disposed in each of the protrusions 25.

If the rotor core is formed to have a saliency structure, the curved surface 26 of each protrusion 25 may be a second opposite surface.

In this manner, if the rotor core 21 is formed to have the saliency structure, magnetic field leakage between poles of the rotor may be prevented as compared to a rotor core of the whole circle shape, thereby improving the efficiency of the rotor core.

The sleeve 50 is a tubular member having a substantially circular cross-section in which both sides thereof is open, and may comprise (e.g., be formed of) metal such as stainless steel or nickel.

The sleeve 50 may be inserted into the external circumference portion of the rotor core 21 and may be fixedly coupled thereto. If the rotor core is formed to have a saliency structure, the sleeve may be in contact with and inserted into the curved surface 26 of each protrusion 25 and may be fixedly coupled thereto.

In this manner, if the sleeve 50 is fixedly mounted on the rotor core 21, the internal circumferential surface of the stator core 11 may act as the first opposite surface, and the external circumferential surface of the sleeve 50 may act as the second opposite surface. In an example, the coating layer 30 may be formed on at least one of the internal circumferential surface of the stator 10 and/or the external circumferential surface of the sleeve 50 forming the rotor 20, which face each other.

In order to form a carbon-based coating layer 30 such as DLC coating on the external circumferential surface of the rotor core 21, surface roughness less than or equal to a predetermined value may be required on the surface. It may be difficult to directly form a carbon-based coating layer such as DLC coating on a rotor core formed by stacking electric steel plates.

Accordingly, in the rotary machine according to the second example of the present disclosure, a sleeve 50 that has a thickness of about 0.2 mm and has at least an external circumferential surface in which a surface roughness thereof is, for example, Ra 0.05 um or less, may be manufactured, and after the sleeve 50 is fixedly mounted on the rotor core 21, a carbon-based coating layer 30 such as the DLC coating may be formed on the external circumferential surface of the sleeve 50.

In a case in which the saliency structure is adopted in the rotor core 21, in order to form the carbon-based coating layer 30 such as the DLC coating only on the curved surface 26 of each protrusion 25, the coating may be quite cumbersome and the man-hours and time required therefor may be increased.

Accordingly, in the rotary machine according to the second example of the present disclosure, the sleeve 50 having a closed cross-section of the whole circle shape may be separately manufactured, and after the sleeve 50 is fixedly mounted on the rotor core 21, the carbon-based coating layer 30 such as the DLC coating may be formed on the external circumferential surface of the sleeve 50, thereby reducing the man-hours and time required for the coating.

In this manner, friction may be reduced in the air gap 31 between the stator 10 and the rotor 20 to which the coating layer 30 is applied through the sleeve 50, and wear and damage may be prevented. Furthermore, since the air gap 31 between the stator 10 and the rotor 20 can be minimized, an air gap-free rotary machine with almost no air gap may be provided.

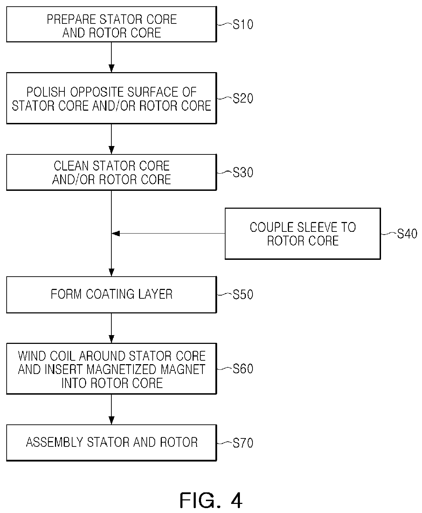

FIG. 4 is a flowchart illustrating a method for manufacturing a rotary machine according to the present disclosure.

The method for manufacturing a rotary machine according to the present disclosure may include: an operation of preparing a stator core 11 and a rotor core 21 (S10); an operation of cleaning the stator core 11 and a rotor core 21 (S30); and an operation of forming a coating layer 30 on at least one of a first opposite surface of the stator core 11 and a second opposite surface of the rotor core 21 (S50).

The stator core 11 may be prepared by stacking a plurality of stator core plates formed of an electric steel plate in an axial direction, and the rotor core 21 may be prepared by stacking a plurality of rotor core plates formed of an electric steel plate in the axial direction (S10).

The stator core 11 may include a rotor accommodating hole 13, a plurality of slots 14, and a plurality of poles 15. The rotor core 21 may include a shaft insertion hole 23 and a plurality of magnet insertion holes 24.

At least the surface to be coated (e.g., the internal circumferential surface of the stator core 11 acting as the first opposite surface and/or the external circumferential surface of the rotor core 21 acting as the second opposite surface) may be polished to have a predetermined surface roughness (S20).

In order to prevent foreign substances from leaking between the plurality of stator core plates or between the plurality of rotor core plates during the coating, each of the stator core 11 and the rotor core 21 may be cleaned, for example, by alkali cleaning or ultrasonic cleaning (S30).

For example, an alkaline cleaner may be used to remove oil or foreign substances from each core, the cleaned core may be rinsed with water to remove the cleaner, and coating adhesion force of each core may be increased through ion cleaning.

Alternatively or additionally, the foreign substances may be removed from each core using ultrasonic waves as a physical means, together with a cleaning agent as a chemical means. In the process of spreading ultrasonic energy to a cleaning solution, a cavitation phenomenon occurs in which microbubbles are generated and extinguished by the pressure of the ultrasonic waves, and cavitation energy may penetrate through surfaces of each core as well as microgrooves, thereby removing the foreign substances.

The sleeve 50 may be inserted into the external circumference portion of the rotor core 21 and may be fixedly coupled thereto (S40). The sleeve 50 may comprise (e.g., be formed of), for example, metal such as stainless steel or nickel, and may have a thickness of about 0.2 mm, and the external circumferential surface thereof may have a surface roughness of, for example, Ra 0.05 µm or less.

The coating layer 30 may be formed on at least one of the first opposite surface of the stator core 11 and/or the second opposite surface of the rotor core 21 (S50). If the sleeve 50 is employed, the coating layer 30 may be formed on at least one of the internal circumferential surface of the stator core 11 and/or the external circumferential surface of the sleeve 50 forming the rotor 10, facing each other.

For example, if the coating layer 30 by DLC coating is adopted among carbon-based coating layers, the coating layer 30 may be formed by depositing an amorphous carbon film on the opposite surface of the stator 10 and/or the rotor 20, by generating plasma in a vacuum using carbon-based gas as a main component of diamond.

To this end, a physical vapor deposition (PVD) method, a plasma enhanced chemical vapor deposition (PECVD) method, and a plasma-assisted chemical vapor deposition (PACVD) method may be used. A temperature at the time of coating may be in the range of about 150°C to 500°C.

The thickness of the coating layer 30 may be in the range of about 1 µm to 100 um. Since the coating layer 30 is formed on at least one of the first opposite surface of the stator 10 and the second opposite surface of the rotor 20, the radial length of the air gap 31 (e.g., the distance (d) between the stator 10 and the rotor 20) may be in the range of about 0.01 mm to 1 mm.

The method for manufacturing a rotary machine according to the present disclosure may further include an operation of winding a coil 12 around the stator core 11 and inserting a magnetized magnet 22 into the rotor core 21 (S60); and an operation of assembling the stator 10 and the rotor 20 (S70) .

The coil 12 may be wound around the pole 15 through both slots 14 disposed adjacently each other in the stator core 11. The stator 10 may be configured by winding a coil for each pole of the stator core 11.

The magnetized magnet 22 may be inserted (e.g., one by one) into each magnet insertion hole 24 provided in the rotor core 21. Accordingly, the rotor 20 may be configured.

For example, if a carbon-based coating layer 30 by the DLC coating is applied to the rotor core 21, because the rotor core 21 during the coating is exposed to a high temperature of about 150°C or higher, the magnetized magnet 22 may be inserted into the rotor core 21 after the coating layer 30 is formed on the rotor core 21 in consideration of thermal demagnetization of the magnet.

An unmagnetized magnet may be inserted into the rotor core 21 before or after the coating layer 30 is formed in the rotor core 21, and in any case, the magnet 22 may be magnetized after the coating layer 30 is formed.

The stator 10 and the rotor 20 may be assembled. The stator 10 is fixedly installed in a housing (not illustrated) of the rotary machine, and the rotor 20 may be fixedly coupled to the external circumferential surface of the shaft 40 in a state in which the shaft 40 penetrates. The rotor 20 may be inserted into the rotor accommodating hole 13 of the stator 10 to complete the rotary machine.

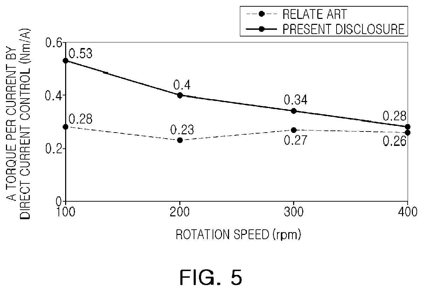

FIG. 5 is a graph comparing power test results of a rotary machine according to a related art and a rotary machine according to the present disclosure, and shows a torque per current (Nm/A) by direct current control with respect to the rotation speed (rpm) of the rotary machine.

The rotary machine according to the related art is a motor without a coating layer between a stator and a rotor, and the rotary machine according to the present disclosure is a motor in which a carbon-based coating layer 30 by the DLC coating is formed between the stator 10 and the rotor 20.

According to the test results illustrated in FIG. 5, it may be seen that a torque power of the motor to which a carbon-based coating layer 30 by the DLC coating is applied was increased as compared with a torque power of the motor without the coating layer regardless of a rotation speed. It may be seen that the torque power of the motor to which the coating layer is applied was improved by up to 80% as compared to the torque power of the motor without the coating layer.

Such test results represent that the coating layer 30 may be formed between the stator 10 and the rotor 20 of the rotary machine, and accordingly, with a decrease in the air gap 31, a magnetic flux linkage caused by the magnet 22 is increased to increase a mechanical power.

According to an aspect of the present disclosure, a rotary machine may include: a stator; a rotor disposed to be separated from the stator by an air gap and configured to be rotatable; and a coating layer formed on at least one of a first opposite surface of the stator and a second opposite surface of the rotor, the first opposite surface and the second opposite surface facing each other.

The stator may include a stator core and a coil wound around the stator core, the rotor may include a rotor core and a plurality of magnets inserted into the rotor core, and an internal circumferential surface of the stator core may act as the first opposite surface, and an external circumferential surface of the rotor core may act as the second opposite surface.

A plurality of protrusions protruding radially outward and spaced apart from each other in a circumferential direction of the rotor core may be formed on an external circumference portion of the rotor core, each of the plurality of protrusions may include a curved surface, and the internal circumferential surface of the stator core may act as the first opposite surface, and the curved surface may act as the second opposite surface.

The rotary machine may further include a sleeve inserted into the external circumference portion of the rotor core and fixedly coupled thereto, and the internal circumferential surface of the stator core may act as the first opposite surface, and an external circumferential surface of the sleeve may act as the second opposite surface.

The external circumferential surface of the sleeve may have a surface roughness of Ra 0.05 um or less.

The coating layer may be formed of a nonmetallic material.

The coating layer may include a carbon-based coated layer containing carbon.

The coating layer may be formed by DLC coating.

A thickness of the coating layer may be in the range of 1 um to 100 µm.

A distance between the stator and the rotor is in the range of 0.01 mm to 1 mm.

The air gap between the stator and the rotor may be filled with a lubricant.

A method for manufacturing a rotary machine may include: preparing a stator core and a rotor core; cleaning the stator core and/or the rotor core; and forming a coating layer on at least one of a first opposite surface of the stator core and a second opposite surface of the rotor core, the first opposite surface and the second opposite surface facing each other.

The method for manufacturing a rotary machine may further include polishing an internal circumferential surface of the stator core acting as the first opposite surface and/or an external circumferential surface of the rotor core acting as the second opposite surface to have a surface roughness of a predetermined value.

The method for manufacturing a rotary machine may further include inserting a sleeve into an external circumference portion of the rotor core and fixedly coupling the sleeve thereto, and the coating layer may be formed on at least one of an internal circumferential surface of the stator core and/or an external circumferential surface of the sleeve.

The method for manufacturing a rotary machine may further include: winding a coil around the stator core and inserting a magnetized magnet into the rotor core; and assembling the stator and the rotor.

As described above, according to the features of the present disclosure, by disposing the coating layer between the stator and the rotor, the air gap between the stator and the rotor may be reduced to maximize output power of the rotary machine. Specifically, when the features of the present disclosure are applied to a superconducting motor in which a magnetic air gap and a mechanical air gap have become very large due to a cooling structure, the power of the motor may be maximized.

Furthermore, according to the features of the present disclosure, because the size of the rotary machine may be reduced as the power of the rotary machine increases, manufacturing costs of the rotary machine can be reduced, and even if the friction occurs between the stator and the rotor, the breakage or damage to the rotary machine may be prevented by a coating layer, thereby improving the marketability and the reliability of the rotary machine.

The descriptions stated above merely illustrate the technical idea of the present disclosure, and it will be apparent to those skilled in the art that modifications and variations could be made without departing from the characteristics of the present disclosure.

Therefore, the features disclosed in this specification and drawings are not intended to limit but to explain the technical idea of the present disclosure, and the scope of the technical idea of the present disclosure is not limited by the illustrated examples. The scope of protection of the present disclosure should be interpreted by the appended claims, and all technical concepts within the scope equivalent thereto should be interpreted as being included in the right scope of the present disclosure.

## Claims

1. A rotary machine comprising:
a stator;
a rotor configured to rotate and disposed to be separated from the stator by an air gap; and
a coating layer formed on at least one of a first opposite surface of the stator and a second opposite surface of the rotor, the first opposite surface and the second opposite surface facing each other.

2. The rotary machine according to claim 1, wherein:
the stator comprises a stator core and a coil wound around the stator core,
the rotor comprises a rotor core and a plurality of magnets, and
the first opposite surface comprises an internal circumferential surface of the stator core, and the second opposite surface comprises an external circumferential surface of the rotor core.

3. The rotary machine according to claim 2, wherein:
a plurality of protrusions protruding radially outward and spaced apart from each other in a circumferential direction of the rotor core are formed on a portion of the rotor core,
each of the plurality of protrusions comprises a curved surface, and
the second opposite surface comprises the curved surface.

4. The rotary machine according to claim 2 or 3, further comprising a sleeve coupled to the external circumference surface of the rotor core,
wherein the second opposite surface comprises an external circumferential surface of the sleeve.

5. The rotary machine according to claim 4, wherein the external circumferential surface of the sleeve has a surface roughness of Ra 0.05 um or less.

6. The rotary machine according to anyone of claims 1-5, wherein the coating layer is formed of a nonmetallic material.

7. The rotary machine according to anyone of claims 1-6, wherein the coating layer comprises a carbon-based coated layer containing carbon.

8. The rotary machine according to anyone of claims 1-7, wherein the coating layer is formed by diamond-like carbon (DLC) coating.

9. The rotary machine according to anyone of claims 1-8, wherein a thickness of the coating layer is in a range of 1 um to 100 µm.

10. The rotary machine according to anyone of claims 1-9, wherein a distance (d) between the stator and the rotor is in a range of 0.01 mm to 1 mm.

11. The rotary machine according to anyone of claims 1-10, further comprising a lubricant in the air gap between the stator and the rotor.

12. A method comprising:
preparing a stator core of a stator and a rotor core of a rotor;
cleaning the stator core and the rotor core;
forming a coating layer on at least one of a first opposite surface of the stator core and a second opposite surface of the rotor core; and
combining the stator core and the rotor core such that the first opposite surface and the second opposite surface face each other.

13. The method according to claim 12, further comprising:
polishing an internal circumferential surface of the stator core and an external circumferential surface of the rotor core to have a surface roughness of a predetermined value,
wherein the first opposite surface comprises the internal circumferential surface of the stator core, and wherein the second opposite surface comprises the external circumferential surface of the rotor core.

14. The method according to claim 12 or 13, further comprising:
coupling a sleeve to a circumference portion of the rotor core,
wherein the coating layer is formed on at least one of an internal circumferential surface of the stator core or an external circumferential surface of the sleeve.

15. The method according to anyone of claims 12-14, further comprising:
winding a coil around the stator core;
inserting a magnetized magnet into the rotor core; and
assembling the stator and the rotor.
